# EUROPÄISCHE PATENTANMELDUNG

(11) **EP 0 979 685 A2**
(43) Veröffentlichungstag der Anmeldung: **16.02.2000**
(21) Anmeldenummer: 99115562.3
(22) Anmeldetag: 06.08.1999
(51) Int. Cl.: B05D 1/02, B05D 3/04

(54) **Verfahren zur Spritzlackierung mit wässrigen, freies Isocyanat enthaltenden Überzugsmitteln**

(30) Priorität: 10.08.1998 DE 19836114
(71) Anmelder: Herberts GmbH & Co. KG, 42285 Wuppertal (DE)
(72) Erfinder: Jöllenbeck, Manfred, 42327 Wuppertal (DE); Kraus, Jürgen, 42285 Wuppertal (DE)
(74) Vertreter: Türk - Gille - Hrabal - Struck

(57) **Zusammenfassung**

Verfahren zur Lackierung eines Substrats durch Spritzauftrag eines wäßrigen, freies Isocyanat enthaltenden Überzugsmittels, bei dem die Isocyanathydrolyse dadurch inhibiert wird, daß der Spritzauftrag in einer gasförmigen, Kohlendioxid enthaltenden oder aus Kohlendioxid bestehenden Atmosphäre durchgeführt wird.

## Beschreibung

Die Erfindung betrifft Verfahren zur Spritzlackierung mit wäßrigen, freies Isocyanat enthaltenden Überzugsmitteln und insbesondere die Verhinderung der Isocyanathydrolyse bei solchen Verfahren.

Bei der Spritzapplikation wäßriger, zur Schaumbildung neigender Lacksysteme, beispielsweise solcher mit Acrylemulsionspolymeren als Bindemittelbasis kann es zu einer unerwünschten Bildung einer großen Anzahl kleiner Schaumbläschen in der Überzugsschicht kommen, die dort bei visueller Betrachtung beispielsweise als Glanzstörung und bei mikroskopischer Betrachtung entweder als solche oder - weil aufgeplatzt - als feine nadelstichartige Löcher wahrgenommen werden. In der EP-A-0 610 040 werden quantitative Angaben zu derartigen Mikroschaumerscheinungen gemacht. Je nach Applikationsbedingungen und Zusammensetzung der in den Beispielen der EP-A-0 610 040 verwendeten wäßrigen Überzugsmittel wird nämlich die Bildung von Schaumbläschen mit einem Durchmesser von typischerweise 10 bis 20 µm in einer Größenordnung von beispielsweise 70 bis über 200 Schaumbläschen pro Quadratzentimeter beschichteter Fläche beobachtet. Als Problemlösung schlägt die EP-A-0 610 040 vor, wasserlösliche Gase, beispielsweise Kohlendioxid als Zerstäubungsgas bei der Spritzapplikation anstelle von Luft zu verwenden. Beispielsweise kann so die Anzahl der Schaumbläschen auf 5 bis 30 Schaumbläschen pro Quadratzentimeter beschichteter Fläche reduziert werden.

Beim Umgang mit wäßrigen, freies Isocyanat enthaltenden Überzugsmitteln besteht das Problem der hohen Reaktivität von Isocyanatgruppen gegenüber Wasser. Bei wäßrigen, freies Isocyanat enthaltenden Überzugsmitteln handelt es sich insbesondere um wäßrige Zweikomponentenüberzugsmittel, die durch Vermischen einer wäßrigen Stammlackkomponente mit einer in der Regel nicht-wäßrigen Polyisocyanatvernetzer-Komponente hergestellt werden. Die Stammlackkomponente enthält dabei härtbare Bindemittel mit aktiven Wasserstoff aufweisenden, mittels Polyisocyanaten vernetzbaren funktionellen Gruppen, beispielsweise primäre oder sekundäre Aminogruppen oder insbesondere Hydroxylgruppen. In wäßrigen Überzugsmitteln enthaltenes freies Isocyanat neigt im Zuge einer Konkurrenzreaktion zur eigentlichen Vernetzungsreaktion zu einer Hydrolyse der Isocyanatgruppen unter Ausbildung von Carbamatgruppen, die dann weiter unter Bildung von Kohlendioxid und primären Aminogruppen zerfallen. Die primären Aminogruppen können im Anschluß daran mit weiteren Isocyanatgruppen unter Bildung von Harnstoffgruppen abreagieren. Dies hat für aus wäßrigen, freies Isocyanat enthaltenden Überzugsmitteln spritzapplizierte Überzugsschichten zweierlei Folgen:
1) Die durch Hydrolyse "verbrauchten" Isocyanatgruppen können ihre eigentliche Aufgabe als vernetzungswirksame Gruppen nicht erfüllen. Es bleiben somit unvernetzte, an sich gegenüber Isocyanatgruppen reaktive funktionelle Gruppen des Bindemittels in der Überzugsschicht zurück.
2) Das infolge Hydrolyse gebildete Kohlendioxid führt zur Ausbildung von Gas- bzw. Schaumbläschen in der Überzugsschicht.

Es kommt also zu einer nicht ordnungsgemäßen Vernetzung und die (aufgeplatzte) Kohlendioxidbläschen enthaltende Überzugsschicht bietet Angriffspunkte, beispielsweise für Korrosion. Insbesondere wenn es sich bei der Kohlendioxidbläschen enthaltenden Überzugsschicht um eine von außen sichtbare, beispielsweise eine Decklackschicht handelt, entspricht diese nicht den Anforderungen an eine optisch einwandfreie Oberfläche.

Der Umfang der unerwünschten Hydrolysenebenreaktion in aus wäßrigen, freies Isocyanat enthaltenden Überzugsmitteln spritzapplizierten Überzugsschichten wird dabei einerseits von der Zusammensetzung des betreffenden Überzugsmittels bestimmt, andererseits von den bei Applikation und Trocknung herrschenden Bedingungen. Ungünstige, weil die Isocyanathydrolyse begünstigende Einflußfaktoren sind erhöhte Ablüft- bzw. Trocknungstemperaturen, beispielsweise von 40°C und höher. Hohe Überzugsschichtdicken beeinflussen nicht die Isocyanathydrolyse an sich; sie begünstigen aber die Ausbildung von Kohlendioxidbläschen in der Überzugsschicht. Bei der Isocyanathydrolyse handelt es sich um eine Zeitreaktion, die im wesentlichen erst in den aus den wäßrigen, freies Isocyanat enthaltenden Überzugsmitteln spritzapplizierten Überzugsschichten stattfindet, beispielsweise während des Ablüftens und/oder Trocknens bzw. Einbrennens der Überzugsschichten. Die Isocyanathydrolyse ist insbesondere durch das Auftreten von Kohlendioxidbläschen visuell wahrnehmbar, insbesondere wenn die spritzapplizierten Überzugsschichten hohe Schichtdicken, beispielsweise von 40 µm und mehr aufweisen. Die durch Isocyanathydrolyse gebildeten Kohlendioxidbläschen sind ohne Mikroskop erkennbar und besitzen Durchmesser von beispielsweise zwischen 50 und 1000 µm. Ihre Anzahl liegt dabei im allgemeinen zwischen einigen wenigen bis mehreren Hundert pro Quadratzentimeter, beispielsweise 5 bis 500. Dies ist insbesondere abhängig von der Schichtdicke.

Es existieren mehrere Ansätze zur Unterdrückung der unerwünschten Isocyanathydrolyse in aus wäßrigen, freies Isocyanat enthaltenden Überzugsmitteln spritzapplizierten Überzugsschichten. Beispielsweise können Maßnahmen bei der Lackformulierung getroffen werden, die die Isocyanathydrolyse als solche erschweren, beispielsweise durch Verwendung spezieller hydrophobisierter Polyisocyanate, oder man versucht beispielsweise die Konkurrenz zwischen angestrebter Vernetzungsreaktion und unerwünschter Isocyanathydrolyse zugunsten der Vernetzungsreaktion zu verschieben durch Verwendung von gegenüber Isocyanat besonders reaktiven Bindemitteln. Außerdem kann der Isocyanathydrolyse von der Verfahrensseite entgegengewirkt werden durch Wahl niedriger Ablüft- bzw. Trocknungstemperaturen. Dies bedeutet jedoch zwangsläufig eine zeitliche Verlängerung im Trocknungsprozeß. Letztlich bieten die erläuterten Gegenmaßnahmen nicht immer ausreichende Abhilfe, und in der Regel handelt es sich um Einschränkungen bei der Formulierung wäßriger, freies Isocyanat enthaltender Überzugsmittel bzw. bei der Gestaltung des Trocknungsprozesses.

Aufgabe der vorliegenden Erfindung ist es, die Isocyanathydrolyse in aus wäßrigen, freies Isocyanat enthaltenden Überzugsmitteln spritzapplizierten Überzugsschichten möglichst weitgehend zu unterbinden oder vollständig zu verhindern.

Diese Aufgabe wird gelöst durch ein Verfahren zur Lackierung eines Substrats durch Spritzauftrag eines wäßrigen, freies Isocyanat enthaltenden Überzugsmittels, das dadurch gekennzeichnet ist, daß der Spritzauftrag in einer gasförmigen, Kohlendioxid enthaltenden oder aus Kohlendioxid bestehenden Atmosphäre durchgeführt wird.

Das erfindungsgemäße Verfahren kann so durchgeführt werden, daß die Kohlendioxid enthaltende oder aus Kohlendioxid bestehende Atmosphäre zumindest beim Versprühen des Überzugsmittels auf die dabei gebildeten Überzugsmitteltröpfchen einwirkt. Dabei wird der Kohlendioxidgehalt so gewählt, daß eine Inhibierung der Isocyanathydrolyse in der spritzapplizierten Überzugsschicht möglich ist.

Die Erfindung betrifft auch ein Verfahren zur Inhibierung der Isocyanathydrolyse in einer aus einem wäßrigen, freies Isocyanat enthaltenden Überzugsmittel spritzapplizierten Überzugsschicht, das dadurch gekennzeichnet ist, daß man zumindest während des Versprühens des Überzugsmittels eine gasförmige, Kohlendioxid enthaltende oder aus Kohlendioxid bestehende Atmosphäre auf die beim Versprühen des Überzugsmittels gebildeten Überzugsmitteltröpfchen und gegebenenfalls auch auf die dabei gebildete Überzugsschicht einwirken läßt.

Darüber hinaus betrifft die Erfindung die Verwendung von Kohlendioxid zur Inhibierung der Isocyanathydrolyse bei der Spritzapplikation von freies Isocyanat enthaltenden wäßrigen Überzugsmitteln. Das Kohlendioxid kann entweder als solches gasförmig eingesetzt werden oder es wird in Form einer Atmosphäre eingesetzt, die einen zur Inhibierung der Isocyanathydrolyse ausreichenden Gehalt an Kohlendioxid aufweist.

Die im erfindungsgmäßen Verfahren verwendeten wäßrigen, freies Isocyanat enthaltenden Überzugsmittel, nachstehend auch kurz als wäßrige Überzugsmittel bezeichnet, unterliegen an sich keiner Beschränkung. Insbesondere handelt es sich bei ihnen um die bekannten wäßrigen Zweikomponenten-Polyurethanlacke (unter Polyurethanbildung vernetzende Lacke), die zur Beschichtung unterschiedlichster Substrate und zur Erzeugung unterschiedlichster Überzugsschichten dienen können, wie beispielsweise Grundierungs-, Primer-, Füller-, Basislack-, Klarlack- oder Decklackschichten. Die wäßrigen Zweikomponenten-Polyurethanlacke können hergestellt werden durch Vermischen zweier getrennt von einander gelagerter Komponenten. Bei der einen Komponente handelt es sich um die sogenannte Stammlackkomponente, welche ein oder mehrere hydroxyfunktionelle Bindemittel in wäßriger Lösung oder als wäßrige Dispersion enthält. Bei der zweiten Komponente handelt es sich um die in der Regel wasserfreie Härterkomponente, welche ein oder mehrere freie Polyisocyanathärter enthält. In der Regel erfolgt das Vermischen beider Komponenten in einem Verhältnis der Anzahl freier Isocyanatgruppen zur Anzahl der dem Bindemittelfestkörper entstammenden Hydroxylgruppen von über 0,5 : 1 und unter 5 : 1, bevorzugt von 0,7 : 1 bis 2,5 : 1 und insbesondere von 0,8 : 1 bis 2,0 : 1.

Die wäßrigen Überzugsmittel enthalten in Wasser gelöste oder dispergierte Bindemittel. Dabei kann es sich um an sich mit Wasser nicht mischbare Bindemittel handeln, die unter Zusatz externer Emulgatoren in die wäßrige Phase überführt worden sind. Als externe Emulgatoren können kationaktive, anionaktive oder nicht-ionische Emulgatoren dienen. Bevorzugt jedoch enthalten die wäßrigen Überzugsmittel wasserverdünnbare Bindemittel, die frei von externen Emulgatoren eingesetzt werden können. Bei den wasserverdünnbaren Bindemittelsystemen handelt es sich um selbstdispergierende Bindemittel, deren Wasserverdünnbarkeit aus einem ausreichend hohen Gehalt an ionischen Gruppen und/oder hydrophilen nicht-ionischen Polyoxyalkylenstrukturen, beispielsweise Polyoxypropylen- und/oder Polyoxyethylenstrukturen, resultiert. Bevorzugt enthalten sie ionische Gruppen und gegebenenfalls zusätzlich nicht-ionische Polyoxyalkylenstrukturen. Als ionische Gruppen kommen kationische, beispielsweise durch Neutralisation von primären, sekundären und/oder tertiären Aminogruppen mit Säuren gebildete Ammoniumgruppen oder durch Neutralisation von sauren Gruppen mit Basen gebildete anionische Gruppen, beispielsweise Sulfonat-, Phosphonat- oder Carboxylatgruppen in Frage. Besonders gebräuchlich sind Bindemittel mit anionischen Gruppen, insbesondere durch Neutralisation mit Basen in Carboxylatgruppen überführte Carboxylgruppen.

Der Bindemittelfestkörper der wäßrigen Überzugsmittel weist beispielsweise eine Hydroxylzahl zwischen 10 und 300, bevorzugt zwischen 20 und 250, besonders bevorzugt zwischen 50 und 200 mg KOH/g auf. Bei der angegebenen Hydroxylzahl handelt es sich uni einen Durchschnittswert, der sich aus den einzelnen Beiträgen des oder der Bindemittel, gegebenenfalls enthaltener Pastenharze und gegebenenfalls enthaltener hydroxyfunktioneller Reaktivverdünner ergibt. Der Bindemittelfestkörper wird gebildet aus der Summe der nicht-flüchtigen Bestandteile der Bindemittel an sich und gegebenenfalls enthaltener Pastenharze (spezielle Anreibebindemittel für Pigmente und Füllstoffe) sowie aus gegebenenfalls enthaltenen hydroxyfunktionellen Reaktivverdünnern. Die Summe aus Bindemittelfestkörper, freiem Polyisocyanat und gegebenenfalls im wäßrigen Überzugsmittel enthaltenem zusätzlichem Vernetzer wird als Harzfestkörper der wäßrigen Überzugsmittel definiert.

Die Harzbasis der Bindemittel unterliegt an sich keiner Beschränkung. Die Bindemittel haben bevorzugt ein zahlenmittleres Molekulargewicht (Mn) über 500 und im allgemeinen unter 500000. Beispiele für geeignete Bindemittelklassen sind (Meth)acrylcopolymerisate, Polyesterharze, urethanisierte Polyester, Polyurethane, Polyharnstoffe sowie Polyurethanharnstoffe. Es können ein oder mehrere Bindemittel im Gemisch eingesetzt werden. Es können auch aus diesen Bindemittelklassen abgeleitete Hybridbindemittel eingesetzt werden. Dabei handelt es sich um Polymerhybride, wobei zwei oder mehrere Bindemitteltypen kovalent oder in Form interpenetrierender Harzmoleküle verbunden vorliegen können.

Die wäßrigen Überzugsmittel enthalten freie Polyisocyanate. Die freien Polyisocyanate können in der wäßrigen Phase gelöst oder dispergiert und/oder in der Bindemittelphase gelöst oder dispergiert in den wäßrigen Überzugsmitteln vorliegen. Sie sind in einer solchen Menge enthalten, daß das Verhältnis der Anzahl freier Isocyanatgruppen zur Anzahl der dem Bindemittelfestkörper entstammenden Hydroxylgruppen über 0,5 : 1 und unter 5 : 1, bevorzugt 0,7 : 1 bis 2,5 : 1 und insbesondere 0,8 : 1 bis 2 : 1 beträgt. Der Gehalt an freien Polyisocyanaten in den erfindungsgemäß verwendeten wäßrigen Überzugsmitteln liegt beispielsweise zwischen 10 und 100 g Isocyanat (berechnet als NCO, Molmasse = 42) pro Liter spritzfertigem Überzugsmittel. Die freien Polyisocyanate können einzeln oder im Gemisch in den wäßrigen Überzugsmitteln enthalten sein. Bei den freien Polyisocyanaten handelt es sich um beliebige organische Di- und/oder Polyisocyanate mit aliphatisch, cycloaliphatisch, araliphatisch und/oder aromatisch gebundenen Isocyanatgruppen, die bei Raumtemperatur flüssig sind oder durch Zusatz organischer Lösemittel verflüssigt oder in gelöster Form vorliegen und dabei bei 23°C im allgemeinen eine Viskosität von 0,5 bis 2000 mPa.s, vorzugsweise über 1 und unter 1000 mPa.s, besonders bevorzugt unter 200 mPa.s aufweisen. Als Diisocyanate sind solche bevorzugt, die 3 bis 36, insbesondere 8 bis 15 Kohlenstoffatome enthalten. Beispiele für geeignete Diisocyanate sind Hexamethylendiisocyanat, Tetramethylxylylendiisocyanat, Isophorondiisocyanat, Dicyclohexylmethandiisocyanat, Cyclohexandiisocyanat, Diphenylmethandiisocyanat, Toluylendiisocyanat.

Als freie Polyisocyanate können auch solche eingesetzt werden, die Heteroatome im die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Harnstoffgruppen und/oder Biuretgruppen aufweisen. Bevorzugt besitzen die Polyisocyanate eine höhere Isocyanatfunktionalität als 2, wie beispielsweise durch Di- und/oder Trimerisierung vorstehend genannter Diisocyanate hergestellte Polyisocyanate vom Uretdion- bzw. Isocyanurattyp. Weitere Beispiele sind durch Umsetzung der vorstehend genannten Diisocyanate mit Wasser hergestellte, Biuretgruppen enthaltende Polyisocyanate oder durch Umsetzung mit Polyolen hergestellte, Urethangruppen enthaltende Polyisocyanate.

Sehr gut geeignet sind beispielsweise "Lackpolyisocyanate" auf Basis von Hexamethylendiisocyanat oder Isophorondiisocyanat und/oder Dicyclohexylmethandiisocyanat, insbesondere solche die ausschließlich auf Hexamethylendiisocyanat basieren. Unter "Lackpolyisocyanaten" auf Basis dieser Diisocyanate sind die an sich bekannten Biuret-, Urethan-, Uretdion-, und/oder Isocyanuratgruppen aufweisenden Derivate dieser Diisocyanate zu verstehen.

Die freien Polyisocyanate können als solche bei der Herstellung der wäßrigen Überzugsmittel zugesetzt werden, beispielsweise durch Einrühren bzw. Einemulgieren. Es kann günstig sein, wenn die freien Polyisocyanate mit einem organischen Lösemittel oder Lösemittelgemisch vorverdünnt werden. Bei den organischen Lösemitteln kann es sich um nicht, teilweise oder vollständig wassermischbare Lösemittel handeln. Bevorzugt werden dabei gegenüber Isocyanatgruppen inerte Lösemittel verwendet. Beispiele sind Lösemittel, die keinen aktiven Wasserstoff enthalten, beispielsweise Ether, wie Diethylenglykoldiethylether, Dipropylenglykoldimethylether; Glykoletherester, wie Ethylglykolacetat, Butylglykolacetat, 3-Methoxy-n-butylacetat, Butyldiglykolacetat, Methoxypropylacetat; N-Methylpyrrolidon; Ester, wie Butylacetat, Isobutylacetat, Amylacetat; aromatische oder aliphatische Kohlenwasserstoffe, z.B. Toluol, Xylol oder lineare oder verzweigte, aliphatische C6- bis C12-Kohlenwasserstoffe.

Es ist auch möglich, hydrophile Polyisocyanate, beispielsweise alleine oder im Gemisch mit den vorstehend erläuterten Polyisocyanaten zu verwenden. Dabei handelt es sich um solche Polyisocyanate, die durch eine ausreichende Anzahl ionischer Gruppen und/oder durch terminale oder laterale Polyetherketten in der wäßrigen Phase stabilisiert werden. Beispiele für als Handelsprodukte vertriebene wasserdispergierbare Polyisocyanate sind die z.B. von der Firma Bayer unter dem Namen Bayhydur^{R} LS 2025-1 und Bayhydur^{R} 3100 vertriebenen Produkte. Auch diese können mit den vorstehend erwähnten Lösemitteln verdünnt werden.

Die wäßrigen Überzugsmittel können nicht, teilweise und/oder vollständig wassermischbare organische Lösemittel in einer Menge von praktisch 0 bis bevorzugt unter 20 Gew.-%, bezogen auf spritzfertiges Überzugsmittel enthalten. Die Lösemittel können aus dem wäßrigen Stammlack, beispielsweise aus der Herstellung der Bindemittel und/oder aus der wie vorstehend erläutert gegebenenfalls mit organischem Lösemittel vorverdünnten Polyisocyanatkomponente stammen und/oder sie werden separat zugegeben. Beispiele für Lösemittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C1- bis C6-Alkyl, Ethoxypropanol, Butylglykol; Glykole, z.B. Ethylenglykol, Propylenglykol und deren Oligomere; Glykoletherester, z.B. Ethylglykolacetat, Butylglykolacetat, 3-Methoxy-n-butylacetat, Butyldiglykolacetat, Methoxypropylacetat; N-Methylpyrrolidon sowie Ketone wie Methylethylketon, Aceton, Cyclohexanon; Ester, wie Butylacetat, Isobutylacetat, Amylacetat; aromatische oder aliphatische Kohlenwasserstoffe, z.B. Toluol, Xylol oder lineare oder verzweigte, aliphatische C6- bis C12-Kohlenwasserstoffe.

Die wäßrigen Überzugsmittel können farb- und/oder effektgebende Effektpigmente und/oder farbgebende Absorptionspigmente und gegebenenfalls Füllstoffe enthalten oder es handelt sich um pigmentfreie oder transparente Pigmente enthaltende Klarlacke. Für Pigmente bzw. Füllstoffe enthaltende wäßrige Überzugsmittel beträgt das Pigment plus Füllstoff/Harzfestkörper-Gewichtsverhältnis beispielsweise zwischen über 0 : 1 und unter 2 : 1. Die gegebenenfalls in den wäßrigen Überzugsmitteln enthaltenen Pigmente werden bevorzugt als Bestandteil der Stammlackkomponente in das wäßrige Überzugsmittel eingeführt.

Weiterhin können die wäßrigen Überzugsmittel lackübliche Additive in lacküblichen Mengen, beispielsweise bis zu 5 Gew.-%, bezogen auf spritzfertiges Überzugsmittel, enthalten, z.B. Verlaufsmittel, Farbstoffe, Lichtschutzmittel, Antioxidantien, Rheologiesteuerer, Antiabsetzmittel, Antischaummittel, haftvermittelnde Substanzen, Vernetzungskatalysatoren. Die Additive werden bevorzugt als Bestandteil der Stammlackkomponente in das wäßrige Überzugsmittel eingeführt.

Die spritzfertigen wäßrigen Überzugsmittel besitzen Festkörpergehalte beispielsweise von 35 bis 60 Gew.-%. Der Festkörper setzt sich je nach Art des Überzugsmittels zusammen aus dem Harzfestkörper sowie gegebenenfalls enthaltenen Pigmenten, Füllstoffen und nicht-flüchtigen Additiven.

Die wäßrigen Überzugsmittel können durch Vermischen der Stammlack- und der Polyisocyanathärterkomponente hergestellt werden. Vorzugsweise werden die beiden Komponenten erst kurz vor der Spritzapplikation miteinander vermischt. Dies kann manuell erfolgen, beispielsweise im handwerklichen Bereich oder es erfolgt beispielsweise im industriellen Bereich maschinell, beispielsweise mittels einer üblichen Zweikomponentenmischanlage, oder einem statischen Mischer, wie einem Kenics®-Mischer.

Die wäßrigen Überzugsmittel sind entsprechend ihrem Verwendungszweck zusammengesetzt. Sie können nach dem erfindungsgemäßen Verfahren zur Beschichtung unterschiedlichster Substrate und dabei beispielsweise zur Erzeugung einer Einschichtlackierung oder zur Erzeugung unterschiedlichster Lackschichten innerhalb einer Mehrschichtlackierung spritzappliziert werden. Beispiele für Lackschichten, die nach dem erfindungsgemäßen Verfahren aus einem wäßrigen, freies Isocyanat enthaltenden Überzugsmittel spritzappliziert werden können, sind Grundierungs-, Primer-, Füller-, Basislack-, Klarlack- oder Decklackschichten. Bei den zu beschichtenden Substraten kann es sich um unbeschichtete oder schon mit einer oder mehreren Überzugsschichten versehene Substrate handeln. Im Falle schon beschichteter Substrate ist es möglich, daß das wäßrige Überzugsmittel nach dem erfindungsgemäßen Verfahren auf eine lediglich abgelüftete oder vorgetrocknete Überzugsschicht nach dem Naß-in-Naß-Verfahren aufgespritzt wird.

Erfindungsgemäß wird das wäßrige, freies Isocyanat enthaltende Überzugsmittel so spritzappliziert, daß man eine einen solchen Kohlendioxidgehalt aufweisende Atmosphäre zumindest während des Versprühens des Überzugsmittels auf das Überzugsmittel, respektive auf die beim Versprühen des Überzugsmittels gebildeten Überzugsmitteltröpfchen einwirken läßt, daß die Isocyanathydrolyse in der spritzapplizierten Überzugsschicht inhibiert wird. Unter Inhibierung der Isocyanathydrolyse wird deren wirksame Hemmung verstanden, insbesondere so, daß eine Bildung von Kohlendioxidbläschen in der spritzapplizierten Überzugsschicht nicht festgestellt werden kann. Gegebenenfalls kann man zusätzlich während des sich an das Versprühen anschließenden Ablüftens und/oder Trocknens bzw. Einbrennens der spritzapplizierten Überzugsschicht eine einen erhöhten Kohlendioxidgehalt aufweisende Atmosphäre oder eine reine Kohlendioxidatmosphäre auf die Überzugsschicht einwirken lassen, dies ist jedoch nicht notwendig.

Die Spritzapplikation der wäßrigen, freies Isocyanat enthaltenden Überzugsmittel erfolgt durch übliche, dem Fachmann bekannte Spritzverfahren, beispielsweise durch gegebenenfalls lenkgasunterstütztes Airless-Spritzen, bevorzugt aber durch gegebenenfalls lenkgasunterstützte Rotationszerstäubung, gegebenenfalls lenkgasunterstütztes pneumatisches Spritzen, gegebenenfalls lenkgasunterstütztes HVLP-Spritzen (HVLP = high volume low pressure). Die Spritzverfahren können elektrostatisch unterstützt sein.

Erfindungsgemäß wirkt zumindest während des Versprühens des wäßrigen, freies Isocyanat enthaltenden Überzugsmittels eine einen solchen Kohlendioxidgehalt aufweisende Atmosphäre auf das Überzugsmittel, respektive auf die beim Versprühen des Überzugsmittels gebildeten Überzugsmitteltröpfchen ein, daß die Isocyanathydrolyse in der spritzapplizierten Überzugsschicht inhibiert wird. Damit die erfindungsgemäße Lösung der Aufgabe erreicht wird, kann der Kohlendioxidgehalt der auf die Überzugsmitteltröpfchen und gegebenenfalls auch die aufgesprühte Überzugsschicht einwirkenden gasförmigen Atmosphäre, beispielsweise 10 bis 100, bevorzugt 20 bis 100 Vol.-% betragen. Beispielsweise kann Kohlendioxidgas als solches oder ein Gasgemisch aus mindestens 10, bevorzugt mindestens 20 Vol.-% Kohlendioxid und dem zu 100 Vol.-% fehlenden Anteil an anderen inerten Gasen oder Gasgemischen verwendet werden. Bevorzugte Kohlendioxid enthaltende Gasgemische sind Luft/Kohlendioxid-Mischungen.

In einer Ausführungsform der Erfindung kann das Versprühen des wäßrigen Überzugsmittels beispielsweise in einer einen entsprechenden Kohlendioxidgehalt aufweisenden Umgebungsatmosphäre durchgeführt werden.

In einer bevorzugten Ausführungsform der Erfindung erfolgt die Einwirkung der Kohlendioxid enthaltenden Atmosphäre jedoch, indem das erfindungsgemäße Verfahren unter Einsatz von Zerstäubungs- und/oder Lenkgas aufweisenden Spritzverfahren durchgeführt wird. Bei Zerstäubungs- und/oder Lenkgas aufweisenden Spritzverfahren handelt es sich um Spritzverfahren, die mittels solcher Sprühorgane durchgeführt werden, welche das Überzugsmittel pneumatisch versprühen und/oder dem Sprühstrahl während des Versprühens mittels Lenkgas eine entsprechende Form verleihen und/oder die Tröpfchengrößenverteilung des versprühten Überzugsmittels beeinflussen. Das verwendete Zerstäubungs- und/oder Lenkgas weist dabei erfindungsgemäß einen entsprechenden Kohlendioxidgehalt von beispielsweise 10 bis 100, bevorzugt von 20 bis 100 Vol.-% auf. Beispielsweise liegt das Molverhältnis von pro Zeiteinheit im Zerstäubungs- und/oder Lenkgas aufgewendetem Kohlendioxid zu in der pro Zeiteinheit versprühten Überzugsmittelmenge enthaltenem Isocyanat (berechnet als NCO, Molmasse = 42) bei 5 bis über 100 : 1, bevorzugt bei 10 bis 50 : 1. Beispiele für bei der Durchführung des erfindungsgemäßen Verfahrens in seiner bevorzugten Ausführungsform anwendbare Spritzverfahren mit Zerstäubungsgas und ohne Lenkgasunterstützung sind: pneumatisches Spritzen und HVLP-Spritzen. Bevorzugt für die Anwendung bei der bevorzugten Ausführungsform des erfindungsgemäßen Verfahrens sind Spritzverfahren mit Lenkgasunterstützung wie beispielsweise lenkgasunterstütztes Airless-Spritzen und lenkgasunterstützte Rotationszerstäubung und insbesondere mit Lenk- und Zerstäubungsgas arbeitende Spritzverfahren wie beispielsweise lenkgasunterstütztes pneumatisches Spritzen, lenkgasunterstütztes HVLP-Spritzen.

Das Arbeiten gemäß bevorzugter Ausführungsform der Erfindung mit einen entsprechenden Kohlendioxidgehalt aufweisendem Zerstäubungs- und/oder Lenkgas verwendenden Spritzapplikationsverfahren kann zusätzlich als unterstützende Maßnahme in einer wie vorstehend erläutert Kohlendioxid enthaltenden Umgebungsatmosphäre durchgeführt werden. Bevorzugt ist es jedoch mit einen entsprechendem Kohlendioxidgehalt aufweisendem Zerstäubungs- und/oder Lenkgas verwendenden Spritzapplikationsverfahren in einer eine übliche Gaszusammensetzung aufweisenden Atmosphäre, beispielsweise Umgebungsluft zu arbeiten. Selbstverständlich kann die Umgebungsluft in für Lackierzwecke üblicher Weise aufbereitet sein, beispielsweise gefiltert, temperiert und auf eine gewünschte Luftfeuchtigkeit eingestellt.

Überraschenderweise kann die Isocyanathydrolyse in aus wäßrigen, freies Isocyanat enthaltenden Überzugsmitteln spritzapplizierten Überzugsschichten durch das erfindungsgemäße Verfahren inhibiert werden. Da die Isocyanathydrolyse als Zeitreaktion im wesentlichen erst nach dem Versprühen eines wäßrigen, freies Isocyanat enthaltenden Überzugsmittels in der spritzapplizierten Überzugsschicht stattfindet, nämlich während des Ablüftens und/oder Trocknens bzw. Einbrennens der Überzugsschicht, war es keineswegs zu erwarten, daß das erfindungsgemäße Verfahren die erfindungsgemäße Aufgabe löst. Einerseits ist es nicht bekannt, welcher Anteil des aufgewendeten Kohlendioxids überhaupt wirksam wird und zum zweiten kann das Kohlendioxid aus dem Wirkort in unbekannter Größenordnung entweichen aufgrund der großen Oberfläche der spritzapplizierten, dünnen Überzugsschichten.

Je nach Zusammensetzung und Verwendungsweck des einzelnen wäßrigen Überzugsmittels erfolgt dessen Spritzapplikation in einer Trockenschichtdicke von beispielsweise 15 bis 150 µm. Die aus den wäßrigen Überzugsmitteln spritzapplizierten Überzugsschichten können - gegebenenfalls nach einem Ablüften bei Temperaturen in einem Bereich von beispielsweise 20 bis 60°C - bei Temperaturen zwischen 20 und 150°C unter Vernetzung getrocknet oder eingebrannt werden. Für Reparaturzwecke oder bei der Anwendung auf temperaturempfindlichen Substraten erfolgt dies bevorzugt zwischen 20 und 100°C, bei der Verwendung als Einbrennsystem beispielsweise können höhere Temperaturen von beispielsweise 80 bis 150°C während der Trocknung bzw. während des Einbrennens herrschen. Gegebenenfalls kann die Überzugsschicht nach dem Ablüften und vor dem Trocknen oder Einbrennen mit einer weiteren Überzugsschicht im Naß-in-Naß-Verfahren überlackiert und dann mit dieser gemeinsam getrocknet oder eingebrannt werden.

Das erfindungsgemäße Verfahren kann bei der Beschichtung verschiedenster Substrate, insbesondere beispielsweise bei der Personenkraftwagen-Erstlackierung, Autoreparaturlackierung, Nutzfahrzeuglackierung oder Kunststofflackierung eingesetzt werden.

Mit dem erfindungsgemäßen Verfahren kann die Isocyanathydrolyse in aus wäßrigen, freies Isocyanat enthaltenden Überzugsmitteln spritzapplizierten Überzugsschichten inhibiert werden, so daß das Isocyanat seiner eigentlichen Aufgabe als Vernetzer gerecht werden kann. Einschränkungen bei der Formulierung der wäßrigen, freies Isocyanat enthaltenden Überzugsmittel oder bei der Wahl der Ablüft- oder Trocknungstemperaturen für die spritzapplizierten Überzugsschichten können vermieden werden. Das Auftreten von durch Isocyanathydrolyse innerhalb der Überzugsschichten gebildeten Kohlendioxidbläschen kann vermieden werden.

### Vergleichsbeispiele 1a-f

Es wird ein wäßriger Stammlack durch Vermischen folgender Bestandteile hergestellt:

19,0 Teile einer wäßrigen Polyacrylatdispersion (Säurezahl 20, Hydroxylzahl 109 mg KOH/g, jeweils bezogen auf Festharz; Bestandteile: 45 Gew.-% Harzfestkörper, 45,6 Gew.-% Wasser, 4 Gew.-% Solvesso®100, 4 Gew.-% Butoxyethanol, 1,4 Gew.-% Dimethylethanolamin), 5,4 Teile Titandioxid und 0,9 Teile Ruß werden zu einer Pigmentpaste vermahlen. Danach wird komplettiert durch Vermischen der Pigmentpaste mit 59 Teilen der vorstehend genannten wäßrigen Polyacrylatdispersion, 3,0 Teilen eines Polyurethanverdickers und 0,8 Teilen eines handelsüblichen Benetzungsadditivs. Mit deionisiertem Wasser wird auf einen Festkörpergehalt von 44 Gew.-% eingestellt.

100 Teile des so hergestellten Stammlacks werden mit 30 Teilen einer 70 gew.-%igen Lösung eines Isocyanurat-Polyisocyanats (auf Basis Hexandiisocyanat, NCO-Gehalt: 22,5 %) in Dipropylenglykoldimethylether mit einem maschinellen Rührer gründlich vermischt. Man erhält einen freies Polyisocyanat enthaltenden Wasserlack.

Der freies Polyisocyanat enthaltende Wasserlack wird durch Zugabe einer geringen Wassermenge auf eine Spritzviskosität von 35 Sekunden (DIN 4, 23°C) eingestellt und in einer ersten Versuchsreihe auf übliche, phosphatierte und durch kathodische Tauchlackierung vorbeschichtete Probebleche aus Stahl durch HVLP-Spritzen (Lackausflußrate: 220 g/min, Zerstäubungs- und Lenkgas : Luft, Gesamtluftdurchsatz 280 l/min) in verschiedenen Trockenschichtdicken von 40 (1a), 80 (1b) und 120 µm (1c) aufgebracht. Nach der Applikation wird 5 Minuten bei 20°C abgelüftet und anschließend 60 Minuten bei 40°C (Objekttemperatur) und danach 30 Minuten bei 80°C (Objekttemperatur) getrocknet unter Vernetzung der Lackschicht (Beispiele 1a-c).

In einer zweiten Versuchsreihe wird analog verfahren mit dem Unterschied, daß 10 Minuten bei 20°C abgelüftet wird (Beispiele 1d-f).

### Beispiele 2a-f (erfindungsgemäß)

Die Beispiele 1a-f werden analog wiederholt, jedoch mit dem Unterschied, daß als Zerstäubungs- und Lenkgas ein Gemisch aus 75 Vol.-% Luft und 25 Vol.-% Kohlendioxid (ventilgesteuerte Vermischung von Druckluft und Kohlendioxid aus einer Druckgasflasche) verwendet wird.

Tabelle 1 stellt die in den Lackierungen der Beispiele 1a-f und 2a-f beobachtete Bildung von Kohlendioxidbläschen zusammen.

### Beispiel 3

Der freies Polyisocyanat enthaltende Wasserlack aus Beispiel 1 wird mittels eines Rakels keilförmig in einem Trockenschichtdickebereich von 0 bis 90 µm auf übliche, phosphatierte und durch kathodische Tauchlackierung vorbeschichtete Probebleche aus Stahl aufgezogen und 10 Minuten bei 20°C abgelüftet und anschließend 60 Minuten bei 40°C (Objekttemperatur) und danach 30 Minuten bei 80°C (Objekttemperatur) getrocknet. Bei visueller Betrachtung der keilförmigen vernetzten Lackschicht wird das Auftreten von Bläschen bei Trockenschichtdicken von 50 µm und mehr beobachtet.

### Beispiel 4

Der freies Polyisocyanat enthaltende und auf Spritzviskosität eingestellte Wasserlack aus Beispiel 1 wird durch pneumatisches Spritzen (Lackausflußrate: 400 g/min, Zerstäubungs- und Lenkgas : Luft, Gesamtluftdurchsatz 200 l/min) keilförmig in einem Trockenschichtdickebereich von 0 bis 100 µm auf übliche, phosphatierte und durch kathodische Tauchlackierung vorbeschichtete Probebleche aus Stahl aufgetragen. Nach der Applikation wird 10 Minuten bei 20°C abgelüftet und anschließend 60 Minuten bei 40°C (Objekttemperatur) und danach 30 Minuten bei 80°C (Objekttemperatur) getrocknet. Bei visueller Betrachtung der keilförmigen vernetzten Lackschicht wird das Auftreten von Bläschen bei Trockenschichtdicken von 50 µm und mehr beobachtet.

### Beispiel 5

Beispiel 4 wird analog wiederholt, jedoch mit dem Unterschied, daß reines Kohlendioxid als Zerstäubungs- und Lenkgas anstelle von Luft verwendet wird. Das Auftreten von Bläschen wird erst bei 80 µm und mehr Trockenschichtdicke wahrgenommen.

**Tabelle 1**

| Beispiele | Trockenschichtdicke (µm) | | |
|---|---|---|---|
| | 40 | 80 | 120 |
| 1a-c | 0 | 15 | n.b. |
| 1d-f | 0 | 10 | n.b. |
| 2a-c | 0 | 0 | 20 |
| 2d-f | 0 | 0 | 0 |

Der Durchmesser der Bläschen liegt zwischen 150 und 400 µm. Angegeben sind die Bläschenanzahlen pro Quadratzentimeter lackierter Fläche; "n.b." bedeutet dabei: nicht bestimmbar, d.h. die Fläche ist voller Bläschen.

## Patentansprüche

1. Verfahren zur Lackierung eines Substrats durch Spritzauftrag eines wäßrigen, freies Isocyanat enthaltenden Überzugsmittels, dadurch gekennzeichnet, daß der Spritzauftrag so durchgeführt wird, daß sich die versprühten Tröpfchen des Überzugsmittels sowie gegebenenfalls auch die spritzapplizierte Überzugsschicht in einer gasförmigen Atmosphäre mit einem Kohlendioxidgehalt von 10 bis 100 Vol-% befinden.

2. Verfahren nach Anspruch 1, dadurch gekennzeichnet, daß man die gasförmige Atmosphäre zumindest während des Versprühens des Überzugsmittels auf das Überzugsmittel und gegebenenfalls auch auf die spritzapplizierte Überzugsschicht einwirken läßt.

3. Verfahren zur Inhibierung der Isocyanathydrolyse in einer aus einem wäßrigen, freies Isocyanat enthaltenden Überzugsmittel spritzapplizierten Überzugsschicht, dadurch gekennzeichnet, daß man zumindest während des Versprühens des Überzugsmittels eine gasförmige Atmosphäre mit einem Kohlendioxidgehalt von 10 bis 100 Vol-% auf die beim Versprühen des Überzugsmittels gebildeten Überzugsmitteltröpfchen und gegebenenfalls auch auf die gebildete Überzugsschicht einwirken läßt.

4. Verfahren nach einem der Ansprüche 1 bis 3, dadurch gekennzeichnet, daß die Spritzapplikation mit der gasförmigen Atmosphäre mit einem Kohlendioxidgehalt von 10 bis 100 Vol-% als Zerstäubungs- und/oder Lenkgas durchgeführt wird.

5. Verfahren nach einem der Ansprüche 1 bis 4, dadurch gekennzeichnet, daß die gasförmige Atmosphäre und/oder das Zerstäubungs- und/oder Lenkgas einen die Isocyanathydrolyse in der spritzapplizierten Überzugsschicht inhibierenden Kohlendioxidgehalt aufweist.

6. Verfahren nach einem der Ansprüche 1 bis 5, dadurch gekennzeichnet, daß als gasförmige Atmosphäre ein Gemisch aus Luft und Kohlendioxid eingesetzt wird.

7. Verwendung einer gasförmigen Atmosphäre mit einem Kohlendioxidgehalt von 10 bis 100 Vol-% zur Inhibierung der Isocyanathydrolyse bei der Spritzapplikation von freies Isocyanat enthaltenden wäßrigen Überzugsmitteln.
